# EUROPEAN PATENT APPLICATION

(11) **EP 1 211 162 A2**
(43) Date of publication of application: **05.06.2002**
(21) Application number: 01310127.4
(22) Date of filing: 04.12.2001
(51) Int. Cl.: B62D 21/08, B62D 23/00, B62D 33/00

(54) **Integral space frame assembly for a vehicle**

(30) Priority: 04.12.2000 US 728975
(71) Applicant: Meritor Heavy Vehicle Systems, LLC, Troy, MI 48084 (US)
(72) Inventor: Platner, David, Shelby, Michigan 48314-2556 (US); Smith, Timothy, Commerce, Michigan 48382 (US); Belanger, Mark, Troy, Michigan 48084 (US)
(74) Representative: Jones, John Bryn

(57) **Abstract**

A vehicle frame (10) includes a space frame assembly (16) which is mounted to a pair of longitudinal mainframes (14). The space frame assembly includes a multiple of a interconnected supports, which are configured to support a plurality of vehicle components.

## Description

### BACKGROUND OF THE INVENTION

The present invention relates to a vehicle main frame, and more particularly to a space frame assembly that extends from a pair of longitudinally extending frame members to support vehicle components.

A vehicle such as a tractor of a tractor-trailer vehicle commonly includes a main frame having a pair of longitudinally extending members. The longitudinal members are commonly relatively large C-channel type rails. The longitudinal members support the vehicle body, the vehicle engine, drivetrain, suspension and other components such as a fifth wheel and auxiliary equipment.

The individual assembly and attachment of each component to the main frame is a time consuming and labor intensive process. Further, it is difficult to integrate vehicle systems as the multiple independent attachment points may increase the complexity and attachment of vehicle components. Additionally, the longitudinal members typically extend the full length of the vehicle and therefore add additional weight to the completed vehicle.

Accordingly, it is desirable to reduce the length and weight of the longitudinal members of the vehicle frame while maintaining their component support and vehicle rigidity functions.

### SUMMARY OF THE INVENTION

The present invention provides a space frame assembly which is mounted to a pair of longitudinal mainframes. The space frame assembly includes a multiple of interconnected tubular supports, which are configured to support a plurality of vehicle components. The space frame assembly also defines an outer structure to support a vehicle body. Preformed supports and mounting points are integrated into the space frame assembly to provide configured locations for the attachment of vehicle components.

Accordingly, by tailoring the space frame assembly to the type of vehicle and vehicle components which are supported thereby, the space frame assembly provides a lightweight, yet rigid support structure for a multiple of vehicles.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 is a general perspective view of a vehicle frame assembly having a space frame assembly according to the present invention;
Figure 2 is general perspective view of the vehicle frame of Figure 1 include a multiple of vehicle components mounted thereto;
Figure 2A is expanded view of an integral vehicle mounting point;
Figure 2B is expanded view of a communication line passing through a tubular support of the space frame assembly according to the present invention; and
Figure 2C is expanded view of an independent suspension extending from the space frame assembly according to the present invention.

### DETAILED DESCRIPTION OF THE PREFERRED EMBODIMENT

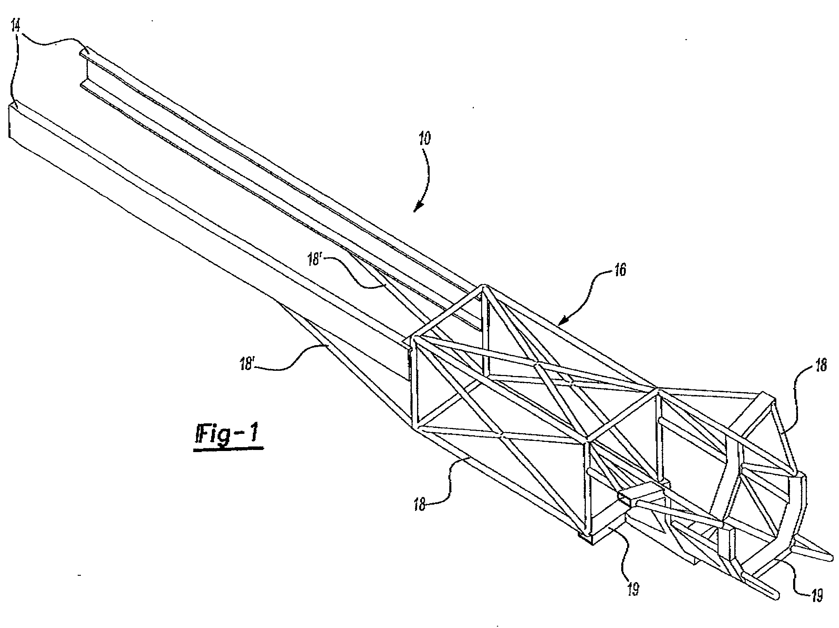

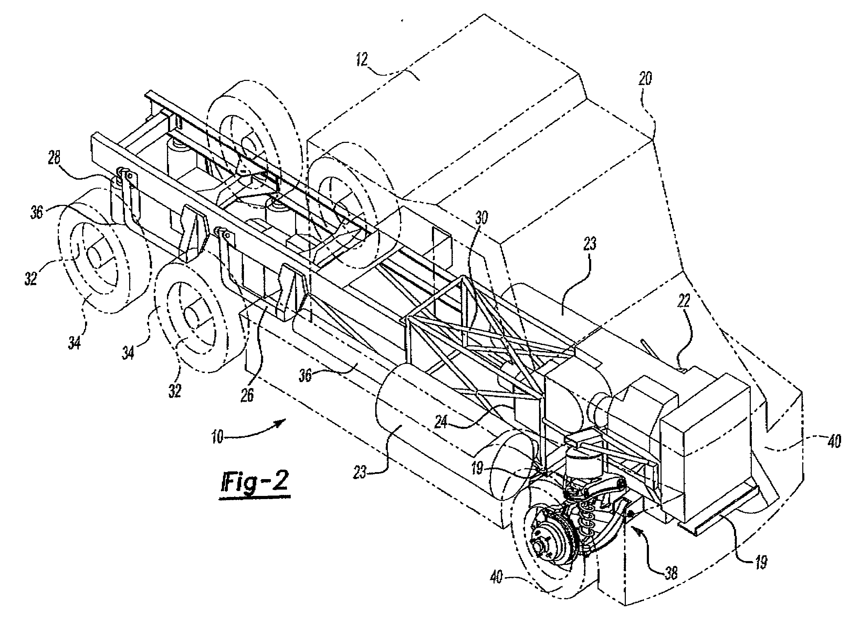

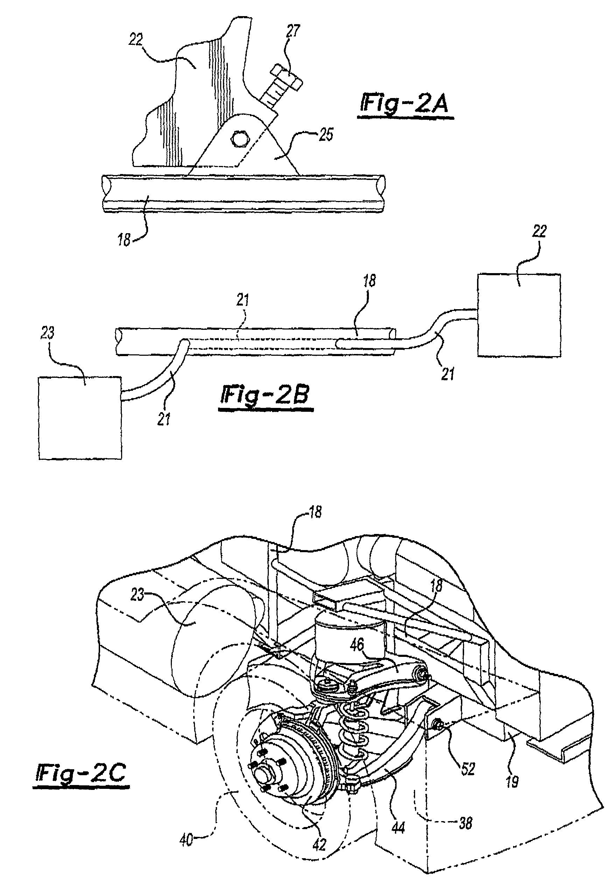

A vehicle frame assembly 10 of the present invention is shown in Figure 1 mated with a generic vehicle. The vehicle 12 (Figure 2) is preferably a selfpowered vehicle such as a truck tractor which includes a pair of longitudinal mainframe members 14. The longitudinal mainframe members 14 are preferably C-channel type rails. It should be realized that many vehicles will benefit from the present invention.

As will be further described below a space frame assembly 16 is preferably an integral unit previously assembled and collectively mounted to the longitudinal mainframes 14 such that the mainframes 14 extend in a cantilevered manner therefrom. However, it will be understood that the space frame assembly 16 can also be mounted to other members and at other locations.

The space frame assembly 16 includes a multiple of interconnected supports 18. Preferably, the supports are substantially tubular in cross-section, however, other configurations will benefit from the present invention. A support 18' extends from the space frame assembly 16 to provide a rigid support for each of the mainframes 14. The space dame assembly 16 is configured to support a plurality of vehicle components (Figure 2) and preferably defines an outer structure to support a vehicle body (illustrated in phantom at 20 in Figure 2). Additionally, preformed supports 19 are preferably integrated into the space frame assembly 16 to provide configured mounting points for the vehicle components. It should be understood that although a particular configuration and orientation of the interconnected supports 18 is disclosed, other configurations particular tailored for other vehicle types will benefit from the present invention. Moreover, by tailoring the space frame assembly 16 to the type of vehicle and vehicle components which are supported thereby, the space frame assembly 16 provides a lightweight, yet rigid support structure.

Referring to Figure 2, the vehicle frame assembly 10 is illustrated supporting a plurality of vehicle components. The space frame assembly 16 supports an engine (shown schematically at 22) and fuel tanks 23. It should be understood that the term engine is used in a generic manner and other propulsion system such as fuel cells and compressed gas systems will benefit from the present invention. Preferably, predetermined mounting points 25 (Figure 2A) along the tubular supports 18 and preformed supports 19 provide fastening locations for each vehicle component. Preferably, threaded fasteners 27 such as bolts or the like are directly threaded into the mounting points 25. However, other more permanent fastening methods such as welding will also benefit from the disclosed mounting points 25.

Further, as the multiple of interconnected tubular supports 18 are preferably hollow, many of the engine 22 communication lines 21 such as electrical, heat, fluid, and other interconnected component communication lines can be run through the multiple of tubular supports 18 to provide a protected environment For example only, fuel can be communicated from the fuel tanks 23 to the engine 22 through the interconnected tubular supports 18 (Figure 2B). These tubes may further be used to store fluids, such as steering oil or windshield washer solvent.

A drivetrain assembly (shown schematically at 24) includes drivetrain components such as a transmission and differential which are operably connected to the engine 22 and a first and second axle assemblies 26,28 through a drive shaft 30. Other drivetrain components, such as components which provide torque and speed multiplication to the wheels as well as other features such as, auxiliary transmissions, transmission drop-boxes, wheel speed differentiation, axle speed differentiation and prevention of wheel speed differentiation may also be mounted to the space frame assembly 16.

Each axle assembly 26,28 is driven by the drivetrain assembly 24 which drives associated wheel hubs 32 and tires 34 in a known manner. While the number of wheels depicted includes four wheels to each axle, it will be understood that this is consistent with standard eighteenwheel tractor construction and that the number of axles and the number of wheels per axle can vary. The axle assemblies 26,28 are mounted to the mainframes 14 by an associated suspension 36. Although a particular suspension is illustrated, other suspension is illustrated, other suspension such as leaf spring, air spring or the like will benefit from the present invention.

Referring to Figure 2C, the space frame assembly 16 preferably includes an independent suspension system 38 to support a pair of steerable wheels 40. It should be understood that although a particular suspension arrangement is illustrated, other suspension assemblies will benefit from the present invention. The independent suspension system 38 is preferably formed integral to the space frame assembly 16. In other words, portions of the independent suspension system 38 and mounting locations therefore are formed from the interconnected tubular supports 18.

The independent suspension system 38 includes an axle 42 which is moveable in an up/down direction via a lower suspension link 44 and an upper suspension link 46 to provide independent articulation of each steerable wheel 40. To accommodate movement of the independent suspension system 38, a spring element such as an airbag 48 is preferably mounted between the upper link 46 and the space frame assembly 16. Preformed supports 19 such as an air bag support 50 and link supports 52 preferably extend from the space frame assembly 16. It should be further understood that shock absorbing and damper elements such as a semi-active spring damper will benefit from the present invention. As the supports 19 are integrated into the space frame assembly 16 mounting of the independent suspension 38 is readily accomplished while maintaining a lightweight and rigid structure.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A vehicle frame assembly (10), comprising:
a pair of longitudinal mainframe members (14); and
a space frame assembly (16) mounted to said pair of longitudinal mainframe members.

2. A vehicle frame assembly (10), comprising:
a pair of longitudinal mainframe members (14);
a plurality of axle assemblies supported by said pair of longitudinal members;
a space frame assembly (16) mounted to said pair of longitudinal mainframe members; and
an independent suspension system extending from said space frame assembly.

3. The vehicle frame assembly according to claim 1 or 2, wherein said pair of longitudinal mainframe members (14) are substantially I-shaped in cross-section.

4. The vehicle frame assembly according to any preceding claim, wherein said space frame assembly supports an axle assembly.

5. The vehicle frame assembly according to any preceding claim, wherein said space frame assembly supports an engine.

6. The vehicle frame assembly according to any preceding claim, wherein said space frame assembly supports an independent suspension.

7. The vehicle frame assembly according to any preceding claim, wherein said pair of longitudinal mainframe members supports a plurality of axle assemblies.

8. The vehicle frame assembly according to any preceding claim, wherein said space frame assembly supports a fuel tank.

9. The vehicle frame assembly according to any preceding claim, wherein said space frame assembly includes a plurality of interconnected tubular supports.

10. The vehicle frame assembly according to any preceding claim, wherein said space frame assembly supports a vehicle body.

11. The vehicle frame assembly according to any preceding claim, wherein said pair of longitudinal mainframe members extend from said space frame assembly in a cantilevered arrangement.

12. The vehicle frame assembly according to any preceding claim, wherein said space frame assembly supports a multiple of vehicle components.

13. The vehicle frame assembly according to any preceding claim, wherein said space frame assembly include a preformed support.

14. The vehicle frame assembly according to any preceding claim, wherein said preformed support provides a mount for a vehicle component.

15. The vehicle frame assembly according to any preceding claim, further comprising a predetermined mounting point extending from said space frame assembly.

16. The vehicle frame assembly according to any preceding claim, wherein said space frame assembly includes a tubular support, said tubular support providing a route for a communication line.
